# EUROPÄISCHE PATENTSCHRIFT

(11) **EP 0 985 240 B1**
(45) Veröffentlichungstag und Bekanntmachung des Hinweises auf die Patenterteilung: **23.07.2003**
(21) Anmeldenummer: 98928325.4
(22) Anmeldetag: 28.05.1998
(51) Int. Cl.: H01M 8/04, H02J 9/06

(54) **BRENNSTOFFZELLENSYSTEM**
FUEL CELL SYSTEM
SYSTEME DE PILE A COMBUSTIBLE

(30) Priorität: 29.05.1997 DE 19722598
(43) Veröffentlichungstag der Anmeldung: 15.03.2000
(73) Patentinhaber: ALSTOM Energietechnik GmbH, 60528 Frankfurt (DE)
(72) Erfinder: BERG, Norbert, D-64295 Darmstadt (DE); FILIP, Gerhard, D-61476 Kronberg (DE); KOHLSTRUCK, Bernd, D-61267 Neu-Anspach (DE); LAMM, Arnold, D-89275 Thalfingen (DE)
(74) Vertreter: Dreiss, Fuhlendorf, Steimle & Becker
(86) Internationale Anmeldenummer: EP9803155
(87) Internationale Veröffentlichungsnummer: WO98054777

(56) Entgegenhaltungen:
- DE-A- 19 538 381
- FR-A- 1 536 877
- GB-A- 1 534 015
- US-A- 5 366 821
- H. KOHLMÜLLER: "Digitale Regelung eines Hydrazin-Sauerstoff-Brennstoffzellennotstr omaggregates" MESSTECHNIK, Bd. 81, Nr. 3, 1973, Seiten 84-86, XP002079800 Erlangen
- NORIO EGUCHI ET AL: "Fuel Cells for Telecommunications" JAPAN TELECOMMUNICATIONS REVIEW, Bd. 22, Nr. 1, Januar 1980, Seiten 75-79, XP002079801 JAPAN
- PATENT ABSTRACTS OF JAPAN vol. 016, no. 236 (E-1210), 29. Mai 1992 & JP 04 047674 A (FUJI ELECTRIC CO LTD), 17. Februar 1992

## Beschreibung

Die Erfindung betrifft ein Brennstoffzellensystem sowie ein Verfahren zum Betreiben eines Brennstoffzellensystems, mit einem Anodenraum und einem Kathodenraum, die durch eine protonenleitende Membran voneinander getrennt sind, wobei im Betriebszustand dem Anodenraum ein Brennstoff, und dem Kathodenraum ein Oxidator, insbesondere Sauerstoff, zuführbar ist. Des weiteren betrifft die Erfindung eine Anordnung zur unterbrechungsfreien Stromversorgung mindestens eines elektrischen Verbrauchers, dessen Energie im Normalfall einem Wechselspannungsnetz und bei Ausfall des Wechselspannungsnetzes einem Brennstoffzellensystem entnehmbar ist sowie ein Verfahren um diese Anordnung zu betreiben.

Aus der deutschen Patentanmeldung P 195 38 381 ist eine Anordnung zur unterbrechungsfreien Stromversorung elektrischer Verbraucher bekannt, bei der bei einem Netzausfall eine sogenannte PEM-Brennstoffzelle (Polymer-Elektrolyt-Membran) die Stromversorgung der Verbraucher übernimmt. Zu diesem Zweck wird der Brennstoffzelle ein Brennstoff und ein Oxidator über Zuleitungen zugeführt. In diesen Zuleitungen sind Ventile enthalten, die im Bereitschaftszustand der Brennstoffzelle, also bei intaktem Wechselspannungsnetz, geschlossen sind. Im Bereitschaftszustand der Brennstoffzelle gelangt somit kein Brennstoff und kein Oxidator in die Brennstoffzelle. Bei einem Neztausfall werden die Ventile geöffnet und der Brennstoff sowie der Oxidator werden der Brennstoffzelle zugeführt. Die Brennstoffzelle geht damit in ihren Betriebszustand über. In diesem Betriebszustand reagieren der Brennstoff und der Oxidator in der Brennstoffzelle, wodurch elektrische Energie erzeugt wird.

Der Übergang von dem Bereitschaftszustand in den Betriebszustand der Brennstoffzelle wird also mit Hilfe von Ventilen durchgeführt. Derartige Ventile, insbesondere elektromagnetisch betätigte Ventile, haben eine Ansprechzeit von mindestens etwa 100 ms. Ein Netzausfall kann somit erst nach einer Ausfallzeit von etwa 100 ms kompensiert werden.

Aufgabe der Erfindung ist es, ein Brennstoffzellensystem sowie ein Verfahren zum Betreiben eines Brennstoffzellensystems sowie eine Anordnung zur unterbrechungsfreien Stromversorgung zu schaffen, mit dem bzw. mit der eine unter 100 ms liegende Ausfallzeit erreichbar ist.

Diese Aufgabe wird bei einem Brennstoffzellensystem bzw. bei einem Verfahren gemäß Anspruch 1 bzw. Anspruch 16.

Der Oxidator ist somit auch im Bereitschaftszustand, also bei intaktem Wechselspannungsnetz, in dem Kathodenraum vorhanden. Bei Netzausfall ist es also nicht - wie beim Stand der Technik - erforderlich, zuerst ein Ventil zu öffnen, um den Oxidator dem Kathodenraum zuzuführen. Statt dessen ist der Oxidator bereits in dem Kathodenraum vorhanden und das Brennstoffzellensystem kann somit ohne jegliche Verzögerung die Stromversorgung der Verbraucher übernehmen.

Durch die Erfindung wird somit erreicht, daß die Ausfallzeit zwischen dem Ausfall des Wechselspannungsnetzes und der Übernahme durch das Brennstoffzellensystem wesentlich kleiner ist als 100 ms. Das erfindungsgemäße Brennstoffzellensystem kann deshalb vorzugsweise in einer Anordnung zur unterbrechungsfreien Stromversorgung von elektrischen Verbrauchern verwendet werden.

Bei einer vorteilhaften Weiterbildung der Erfindung ist der Kathodenraum mit einer Kathodenableitung verbunden, die mit einem Sperrglied, insbesondere einem Magnetventil, versehen ist, das in dem Bereitschaftszustand geschlossen ist. Auf diese Weise kann der Kathodenraum im Bereitschaftszustand zumindest einseitig abgeschlossen werden, so daß der Oxidator einerseits im Kathodenraum vorhanden ist, andererseits aber nicht durch den Kathodenraum hindurch strömen kann. Im Betriebszustand ist das Sperrglied geöffnet, so daß dann der Oxidator durch den Kathodenraum hindurchströmt. Eine permanente Reaktion des Brennstoffs und des Oxidators findet dann statt.

Bei einer vorteilhaften Ausgestaltung der Erfindung ist der Kathodenraum mit einer ersten Kathodenzuleitung verbunden, die über ein Sperrglied, insbesondere ein Magnetventil, und/oder einen Druckminderer mit mindestens einem mit dem Oxidator gefüllten Tank oder dergleichen verbunden ist. Dies stellt eine besonders einfache und kostengünstige Art dar, den Oxidator während des Bereitschaftszustands zur Verfügung zu stellen.

Bei einer weiteren vorteilhaften Ausgestaltung der Erfindung ist der Kathodenraum mit einer zweiten Kathodenzuleitung verbunden, die über ein Sperrglied, insbesondere ein Magnetventil, mit einem ein Gas, insbesondere Luft, ansaugenden Kompressor oder dergleichen verbunden ist. Auf diese Weise ist es möglich, in dem Betriebszustand den Oxidator insbesondere Sauerstoff nicht mehr aus dem Tank zu entnehmen, sondern in einfacher Weise beispielsweise aus der Luft anzusaugen. Der Oxidator wird also zuerst aus einem Tank dem Kathodenraum zugeführt, um dann bei längerem Betrieb ein Gas, insbesondere Luft, in den Kathodenraum anzusaugen. Der in dem Tank enthaltene Oxidator wird dadurch im Betriebszustand des Brennstoffzellensystems nicht verbraucht, so daß ein Auffüllen oder ein Wechsel des Tanks nur selten erforderlich ist.

Bei einer besonders vorteilhaften Ausgestaltung der Erfindung ist in dem Bereitschaftszustand der Brennstoff in dem Anodenraum vorhanden. Vorzugsweise steht der Brennstoff unter Druck an der Membran an. Dabei kann der Brennstoff entweder statisch in dem Anodenraum vorhanden sein, z. B. in Form von Wasserstoff aus einem Druckbehälter, oder es ist möglich, daß der Brennstoff, z. B. ein flüssiger Brennstoff, intervallartig oder andauernd durch den Anodenraum hindurchströmt. Wesentlich ist nur, daß der Brennstoff in dem Anodenraum vorhanden ist und an der Membran ansteht. Der Brennstoff ist somit auch im Bereitschaftszustand, also bei intaktem Wechselspannungsnetz, in dem Anodenraum vorhanden. Bei Netzausfall ist es also nicht - wie beim Stand der Technik - erforderlich, zuerst ein Ventil zu öffnen, um den Brennstoff in den Anodenraum zuzuführen. Statt dessen ist der Brennstoff bereits in dem Anodenraum vorhanden und das Brennstoffzellensystem kann somit ohne jegliche Verzögerung die Stromversorgung der Verbraucher übernehmen.

Bei einer besonders vorteilhaften Ausgestaltung wird die Brennstoffzelle schon im Bereitschaftszustand im Bereich der optimalen Betriebstemperatur gehalten. Bei 80-100°C ist die Leistung der Brennstoffzelle ungefähr das Doppelte der Leistung bei Raumtemperatur (20-30°C). Dies kann durch Temperieren eines Kreislaufes eines flüssigen Brennstoffes oder durch einen getrennten Temperierkreislauf erfolgen. Die Heizung erfolgt vom Netz aus. Diese Maßnahme verbessert den sofortigen Wirkungsgrad der Stromlieferung bei Netzausfall. Dadurch kann die Zellenzahl (Stack), die für die Investitionskosten maßgebend ist, deutlich verringert werden.

Durch das erfindungsgemäße Verfahren wird somit ein Brennstoffzellensystem bereit gestellt, bei dem im Bereitschaftszustand, also bei intaktem Wechselspannungsnetz, der zumindest einseitig abgeschlossene Kathodenraum mit dem Oxidator gefüllt wird damit der Oxidator in dem Kathodenraum vorhanden ist, und der Anodenraum mit dem Brennstoff gefüllt wird damit der Brennstoff in dem Anodenraum vorhanden ist. Dies hat zur Folge, daß das erfindungsgemäße Brennstoffzellensystem bereits im Bereitschaftszustand eine Ruhe-Spannung erzeugt.

Aufgrund des nicht-durchströmbaren Kathodenraums würde in diesem Zustand das Brennstoffzellensystem bei einer angeschlossenen Last, also beispielsweise nach einem Netzausfall, jedoch nur kurzzeitig einen Strom liefern können. Dies wird dadurch vermieden, daß für einen Übergang von dem Bereitschaftszustand in den Betriebszustand des Sperrglieds des Kathodenraums geöffnet wird. Der Kathodenraum ist somit nicht mehr abgeschlossen und der Oxidator kann nunmehr durch den Kathodenraum hindurchströmen. Es kann somit fortwährend die elektrochemische Reaktion in der Brennstoffzelle stattfinden, so daß auch fortwährend ein Strom erzeugt wird. In diesem Betriebszustand kann dann das Brennstoffzellensystem das ausgefallene Wechselspannungsnetz ersetzen. Eine H₂/O₂ Zelle von ca. 1500 l liefert bei 80°C eine Leistung von 250 kW während mehreren Stunden, bei geringem, unter 2 bar, Schallpegel und praktisch ohne Schadstoffemission.

Der für das Öffnen des Sperrglieds erforderliche Zeitraum beträgt bei elektromagnetisch betätigten Ventilen, wie bereits erläutert, etwa 100 ms. Die genannte Ansprechzeit von etwa 100 ms stellt deshalb bei der Erfindung kein Problem dar, weil in diesem Zeitraum, wie gesagt, eine ausreichende Reaktion bereits stattfinden kann, während beim Stand der Technik während des Öffnens der Ventile systembedingt gar keine Reaktion vorhanden sein kann. Die erfindungsgemäße Anordnung liefert Strom innerhalb 10 ms.

Durch den auf den Kathodenraum und den Anodenraum ausgeübten Druck, der vorzugsweise etwa gleich groß ist und beispielsweise etwa 2 bar beträgt, wird erreicht, daß keine transmembrane Druckdifferenz vorhanden ist und somit keine Schäden an der Membran auftreten können.

Bei einer vorteilhaften Weiterbildung der Erfindung ist der Anodenraum zur Zuführung eines flüssigen Brennstoffs, z.B. Methanol, mit einem Anodenkreislauf verbunden. Besonders zweckmäßig ist es, wenn dieser Anodenkreislauf mit einer Pumpe und einer Heizung versehen ist. Damit ist es auf einfache Weise möglich, daß der Brennstoff durch den Anodenraum hindurchströmt. Des weiteren kann die Brennstoffzelle im Bereitschaftszustand auf einfache Weise auf einer gewünschten Temperatur gehalten werden.

Bei einer vorteilhaften Ausgestaltung der Erfindung steht der Anodenkreislauf unter einem Druck. Der Brennstoff wird also unter einem permanenten Druck an der Membran anstehend erzeugt. Dadurch wird die Reaktion des Brennstoffs und des Oxidators verbessert, mit der Folge, daß das erfindungsgemäße Brennstoffzellensystem besonders schnell von dem Bereitschaftszustand in den Betriebszustand übergehen kann. Des weiteren wird bei Methanolbrennstoff durch den auf den Anodenkreislauf ausgeübten Druck erreicht, daß Methanolverluste aufgrund eines Kohlendioxidaustrags wesentlich reduziert werden.

Bei einer vorteilhaften Weiterbildung der Erfindung sind der Anodenraum und der Kathodenraum in einem gasdichten und gegebenenfalls zusätzlich wärmedichten Gehäuse untergebracht. Auf diese Weise wird erreicht, daß die Temperatur des Brennstoffs in dem Anodenkreislauf nur wenig äußeren Einflüssen ausgesetzt ist und sich deshalb insbesondere im Bereitschaftszustand nur geringfügig verringert. Besonders zweckmäßig ist es, wenn das Gehäuse unter einem Druck steht, insbesondere unter einem Stickstoffdruck. Damit werden Leckagen des Anodenraums und/oder des Kathodenraums weitgehend unterdrückt. Des weiteren wird durch den Stickstoffdruck ein Sieden eines flüssigen Brennstoffs, insbesondere ein Sieden eines Methanol/Wasser-Gemischs im Anodenkreislauf vermieden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.
- Figur 1: zeigt ein schematisches Blockschaltbild eines Ausführungsbeispiels einer erfindungsgemäßen Anordnung zur unterbrechungsfreien Stromversorgung mindestens eines elektrischen Verbrauchers;
- Figur 2: zeigt ein schematisches Blockschaltbild eines Ausführungsbeispiels eines erfindungsgemäßen Brennstoffzellensystems zur Verwendung in der Anordnung nach der Figur 1;
- Figur 3: zeigt ein schematisches Blockschaltbild eines zweiten Ausführungsbeispiels einer erfindungsgemäßen Brennstoffzelle zur Verwendung in der Anordnung nach der Figur 1;
- Figur 4: zeigt ein schematisches Blockschaltbild der Gaszufuhr der in Figur 3 gezeigten Brennstoffzelle.

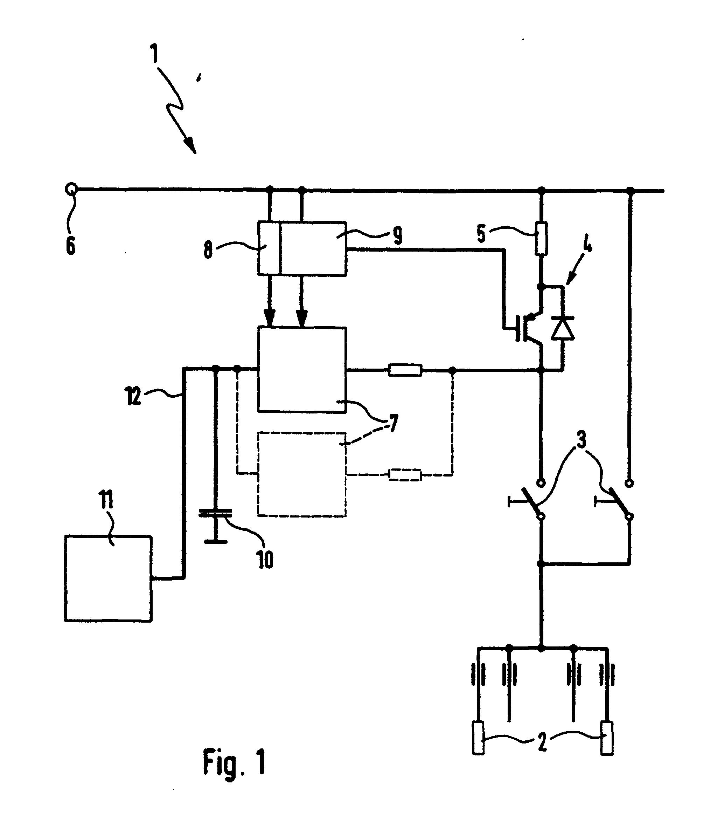

In der Figur 1 ist eine Anordnung 1 zur unterbrechungsfreien Stromversorgung mindestens eines elektrischen Verbrauchers dargestellt. Eine derartige Anordnung kann beispielsweise als sogenannte unterbrechungsfreie Stromversorgung (USV) in einem Rechenzentrum oder dergleichen vorgesehen sein. Die Verbraucher, also beispielsweise die in dem Rechenzentrum vorhandenen elektrischen Geräte, sind im Normalfall an ein Wechselspannungsnetz angeschlossen. Bei dessen Ausfall übernimmt dann die Anordnung 1 die Stromversorgung der Verbraucher. Üblicherweise wird von der Anordnung 1 dabei verlangt, daß eine Übernahme der Stromversorgung innerhalb weniger Millisekunden möglich ist.

In der Figur 1 sind eine Mehrzahl von elektrischen Verbrauchern 2 durch Widerstandssymbole dargestellt. Die Verbraucher 2 sind über einen gemeinsamen Bypass-Schalter 3 an einen schnell schaltenden Schalter 4 angeschlossen. Der Bypass-Schalter 3 kann von Hand betätigbar sein. Bei dem Schalter 4 kann es sich um ein kontaktloses Schaltelement, beispielsweise um antiparallel geschaltete Thyristoren oder dergleichen handeln.

Der Eingang des Schalters 4 ist über eine Drossel 5 mit einem Wechselspannungsnetz 6 verbunden. Des weiteren sind ein erster und gegebenenfalls weitere Wechselrichter 7 vorgesehen, die zueinander parallel geschaltet sind, und die mit dem verbraucherseitigen Ausgang des Schalters 4 verbunden sind.

Zwischen das Wechselspannungsnetz 6 und den Wechselrichter 7 ist ein Hilfsgleichrichter 8 geschaltet, der die Leerlaufverluste des Wechselrichters 7 abdeckt. Des weiteren speist der Hilfsgleichrichter 8 ein Steuergerät 9, das mit dem Steuereingang des Schalters 4 verbunden ist.

Die Eingangsgleichrichter der Wechselrichter 7 sind mit einer gegen Masse geschalteten Kapazität 10 sowie einem Brennstoffzellensystem 11 verbunden, letzteres über eine elektrische Leitung 12.

Im Normalbetrieb des Wechselspannungsnetzes 6 fließt ein Strom über die geschlossenen Schalter 4 und 3 zu den Verbrauchern 2. Tritt nun im Wechselspannungsnetz 6 ein Netzausfall auf, so wird dies von dem Steuergerät 9 erkannt. Das Steuergerät 9 schaltet den Schalter 4 in seinen geöffneten Zustand. Die Stromversorgung der Verbraucher 2 wird nunmehr von dem Brennstoffzellensystem 11 über die Wechselrichter 7 übernommen. Dabei dient die Kapazität 10 zur Überbrückung des Umschaltvorgangs von dem Wechselspannungsnetz 6 zu dem Brennstoffzellensystem 11 sowie zur Glättung der von dem Brennstoffzellensystem 11 erzeugten Spannung.

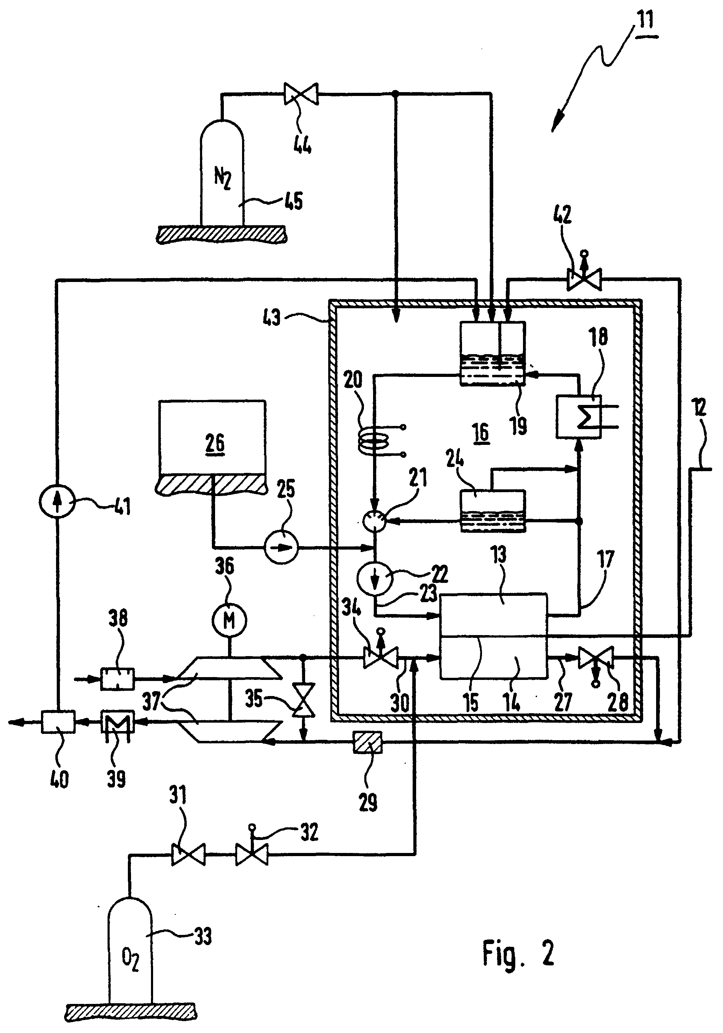

In der Figur 2 ist ein erstes Ausführungsbeispiel des Brennstoffzellensystems 11 detailliert dargestellt. Es weist einen Anodenraum 13 und einen Kathodenraum 14 auf, die von einer protoneneleitenden Membran 15 getrennt sind. Der Anodenraum 13, der Kathodenraum 14 und die Membran 15 bilden eine sogenannte Direktmethanol-Brennstoffzelle (DMFC), in der mittels eines elektrochemischen Prozesses elektrische Energie erzeugbar ist. Diese ist auf der elektrischen Leitung 12 in der Form einer elektrischen Spannung bzw. eines elektrischen Stroms abgreifbar.

Der Anodenraum 13 ist mit einem Anodenkreislauf 16 verbunden, der ausgehend von einer Anodenableitung 17 über einen Kühler 18, einen zweikammrigen Abscheider 19, eine Heizung 20, ein Thermostatventil 21 und eine Kühlmittelpumpe 22 mit einer Anodenzuleitung 23 verbunden ist. Ein weiterer Abscheider 24 ist einerseits an die Anodenableitung 17 angeschlossen sowie andererseits an das Thermostatventil 21. Über eine Dosierpumpe 25 ist ein Tank 26 an den Anodenkreislauf 16 angeschlossen, und zwar vor der Kühlmittelpumpe 22.

Der Kathodenraum 14 ist über eine Kathodenableitung 27 mit einem Magnetventil 28 verbunden, das ausgangsseitig an einen katalytischen Brenner 29 angeschlossen ist. Des weiteren ist der Kathodenraum 14 über eine Kathodenzuleitung 30 sowie über einen Druckminderer 31 und ein Magnetventil 32 an einen Tank 33 angeschlossen. Die Kathodenzuleitung 30 ist ebenfalls mit einem Magnetventil 34 verbunden, das über ein Bypass-Magnetventil 35 mit der dem Magnetventil 28 abgewandten Seite des katalytischen Brenners 29 angeschlossen ist.

Die beiden Seiten des Bypass-Magnetventils 35 sind mit den Ausgängen einer von einem Motor 36 angetriebenen Kompressor-Expander-Einheit 37 verbunden. Einer der Eingänge der Einheit 37 saugt Luft über ein Filter 38 an. Der andere Eingang der Einheit 37 ist über einen Kühler 39, einen Ablauf 40 und eine Pumpe 41 an den Abscheider 19 des Anodenkreislaufs 16 angeschlossen. Dieser Abscheider 19 ist des weiteren über ein Magnetventil 42 an den katalytischen Brenner 29 angeschlossen.

Der Anodenraum 13, der Kathodenraum 14, die Membran 15, der Anodenkreislauf 16 mit der Anodenableitung 17, dem Kühler 18, dem Abscheider 19, der Heizung 20, dem Thermostatventil 21, der Kühlmittelpumpe 22, der Anodenzuleitung 23 und dem Abscheider 24, sowie die Kathodenableitung 27, das Magnetventil 28, die Kathodenzuleitung 30 und das Magnetventil 34 sind in einem Gehäuse 43 untergebracht. Das Gehäuse 43 ist gasdicht, druckfest und wärmeisolierend ausgeführt. Über einen Druckminderer 44 ist das Gehäuse 43 mit einem Tank 45 verbunden. Des weiteren ist der Tank 45 über den Druckminderer 44 an den Abscheider 19 des Anodenkreislaufs 16 angeschlossen.

In dem Tank 33 ist Sauerstoff vorhanden, der als Oxidator vorgesehen ist. Der Tank 26 enthält Methanol, das als Brennstoff vorgesehen ist. In dem Tank 45 ist Stickstoff enthalten, der als Druckmittel vorgesehen ist. Des weiteren ist in dem Anodenkreislauf 16 Wasser als Kühlmittel vorgesehen.

Bei intaktem Wechselspannungsnetz 6 befindet sich das Brennstoffzellensystem 11 in einem Bereitschaftszustand, in dem das Magnetventil 28 geschlossen ist. Des weiteren sind die Magnetventile 34 und 42 sowie das Bypass-Ventil 35 geschlossen. Das Magnetventil 32 ist geöffnet.

Aufgrund der geschlossenen Magnetventile 28 und 34 und des geöffneten Magnetventils 32 wird der Kathodenraum 14 mit Sauerstoff aus dem Tank 33 gefüllt. Der Sauerstoff ist danach in dem Kathodenraum 14 vorhanden und steht mit einem Druck an der Membran 15 an. Der Druck ist mittels des Druckminderers 31 auf einen erwünschten Wert, beispielsweise auf 2 bar einstellbar. Der Sauerstoff kann jedoch aufgrund des geschlossenen Magnetventils 28 nicht durch den Kathodenraum 14 hindurchströmen.

In dem Anodenraum 13 und in dem Anodenkreislauf 16 ist ein Methanol/Wasser-Gemisch vorhanden. Die Temperatur des Methanol/Wasser-Gemischs beträgt etwa 110 Grad. Die Kühlmittelpumpe 22, die Dosierpumpe 25 sowie die Pumpe 41 sind ausgeschaltet. Die Heizung 20 und die Kompressor-Expander-Einheit 37 sind ebenfalls ausgeschaltet.

Sinkt die Temperatur des Methanol/Wasser-Gemischs mit der Zeit ab und fällt unter eine Temperatur von beispielsweise etwa 100 Grad, so wird die Heizung 20 und die Kühlmittelpumpe 22 eingeschaltet. Das Methanol/Wasser-Gemisch wird dadurch im Anodenkreislauf 16 umgepumpt und erwärmt.

Die in dem Bereitschaftszustand eingeschalteten elektrischen Bauteile des Brennstoffzellensystems 11 werden dabei aus dem Wechselspannungsnetz 6 mit elektrischer Energie versorgt.

Der Druck des Stickstoffs aus dem Tank 45 wird über den Abscheider 19 des Anodenkreislaufs 16 in den Anodenraum 13 übertragen. Dieser Druck ist dabei über den Druckminderer 44 auf einen erwünschten Wert, beispielsweise auf 2 bar einstellbar. Das Methanol/Wasser-Gemisch steht damit unter diesem Druck an der Membran 15 an.

Die Membran 15 ist protonenleitend. Das im Anodenraum 13 vorhandene Methanol/Wasser-Gemisch wird unter Abgabe von Wasserstoffprotonen und Elektronen in Kohlendioxid umgewandelt. Die Wasserstoffprotonen gelangen durch die Membran 15 hindurch und reagieren mit dem in dem Kathodenraum 14 vorhandenen Sauerstoff zu Wasser. Durch die bei dieser chemischen Reaktion gebildeten Elektronen entsteht die bereits erwähnte elektrische Spannung bzw. der elektrische Strom auf der elektrischen Leitung 12.

Im Bereitschaftszustand des Brennstoffzellensystems 11 ist der Kathodenraum 14, wie erläutert, zumindest einseitig abgeschlossen, so daß der Sauerstoff in dem Kathodenraum 14 wohl vorhanden ist, jedoch diesen nicht durchströmen kann. Dies hat zur Folge, daß die genannte chemische Reaktion im Umfang des vorhandenen Sauerstoffs stattfindet, dann jedoch zum Stillstand kommt. Auf diese Weise entsteht eine elektrische Spannung auf der Leitung 12.

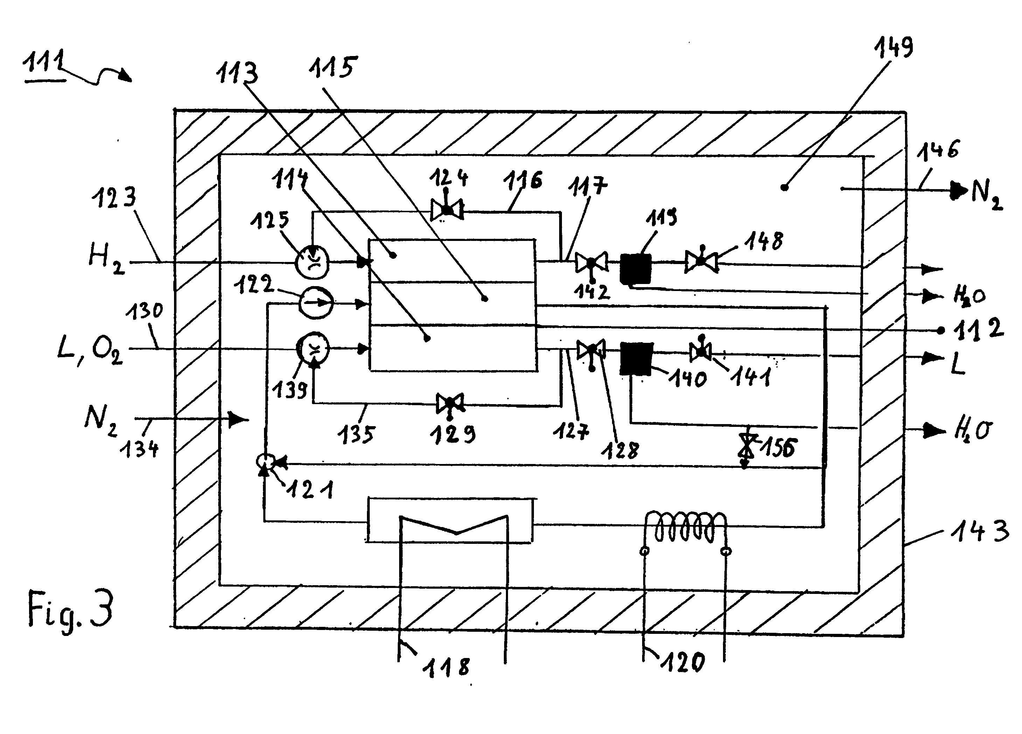

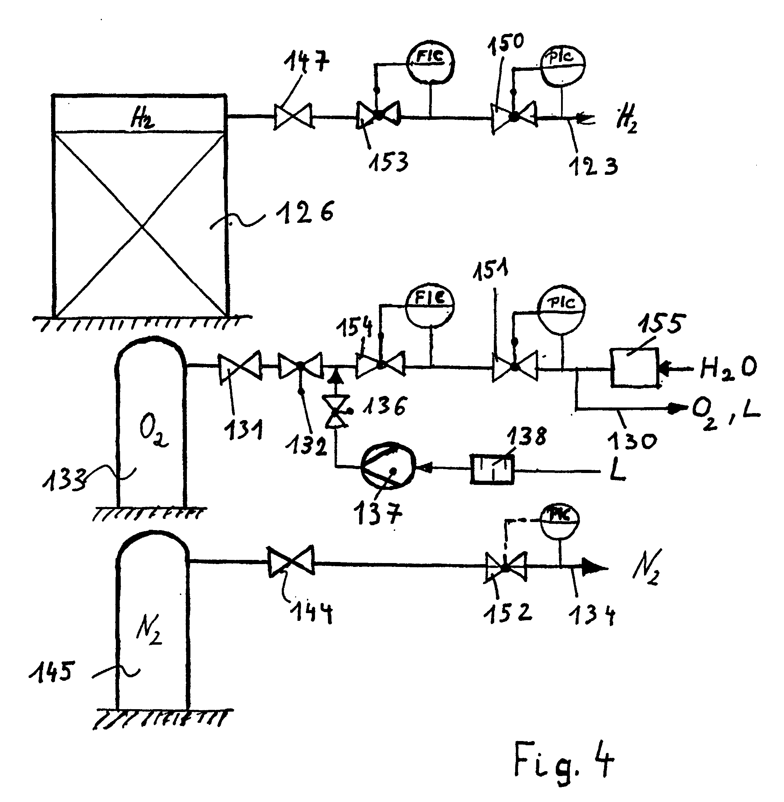

In den Figuren 3 und 4 ist ein zweites Ausführungsbeispiel des Brennstoffzellensystems detailliert dargestellt. Das Brennstoffzellensystem 111 weist einen Anodenraum 113 und einen Kathodenraum 114, die von einer protonenleitenden Membran 115 getrennt sind, und einen Temperierkreislauf auf. Der Anodenraum 113, der Kathodenraum 114 und die Membran 115 bilden eine Wasserstoffbrennstoffzelle (PEMFC), in der mittels eines elektrochemischen Prozesses elektrische Energie erzeugbar ist. Diese ist auf der elektrischen Leitung 112 in der Form einer elektrischen Spannung bzw. eines elektrischen Stroms abgreifbar.

Der Anodenraum 113 ist über eine Anodenableitung 117 mit einem Sperrglied, einem Magnetventil 142 verbunden. Stromabwärts des Sperrgliedes 142 befindet sich ein Abscheider 119 mit einem Ablauf für Wasser und einem Ausgang für Gase, der über ein Ventil 148 ins Äußere mündet. Der Anodenraum 113 ist ebenfalls mit einem Anodenkreislauf 116 verbunden, der, ausgehend von der Anodenableitung 117, über ein Magnetventil 124 und eine Strahlpumpe 125 mit einer Anodenzuleitung 123 verbunden ist. Des Weiteren ist die Anodenzuleitung 123 über wenigstens einen Druckminderer 147 an einen Wasserstofftank 126 angeschlossen. Als Wasserstofftank können sowohl eine Druckflasche als ein Metallhydridspeicher verwendet werden.

Der Kathodenraum 114 ist über eine Kathodenableitung 127 mit einem Sperrglied, einem Magnetventil 128 verbunden. Stromabwärts des Sperrgliedes 128 befindet sich ein Abscheider 140 mit einem Ablauf für Wasser und einem Ausgang für Gase, der über ein Ventil 141 ins Äußere mündet. Zwischen dem Kathodenraumausgang und dem Magnetventil 128 ist die Kathodenableitung 127 durch einen Kathodenkreislauf 135 über ein Magnetventil 129 und eine Strahlpumpe 139 mit einer Kathodenzuleitung 130 verbunden. Des Weiteren ist der Kathodenraum 114 über die Kathodenzuleitung 130 sowie über einen Druckminderer 131 und ein Magnetventil 132 an einen Sauerstofftank 133 angeschlossen. Die Kathodenzuleitung 130 ist ebenfalls mit einer Kompressoreinheit 137 verbunden. Einer der Eingänge der Einheit 137 saugt Luft über einen Filter 138 an.

Die Brennstoffzelle ist ebenfalls mit einem Temperierkreislauf ausgerüstet. Das Kühlwasser wird durch eine Umwälzpumpe 122 über eine Heizung 120 und einen Kühler 118 umgewälzt. Ein Dreiwegthermostatventil 121 erlaubt einen Bypass des Kühlers 118 und der Heizung 120, wenn die Temperatur der Zelle im Sollbereich, 80 bis 90 ° C liegt. Wenn die Temperatur unter 70 ° sinkt, schaltet das Thermostatventil 121 den Kreislauf über die eingeschaltete Heizung, welche im Bereitschaftszustand vom Netz gespeist wird.

Der Anodenraum 113, der Kathodenraum 114, die Membran 115, der Anodenkreislauf 116, der Kathodenkreislauf 135, der Temperierkreislauf mit dem Kühler 118, der Heizung 120 und der Umwälzpumpe 122, die Abscheider 119 und 141 sowie die Zuund Ableitungen dieser Teile sind in einem Gehäuse 143 untergebracht. Das Gehäuse 143 ist gasdicht, druckfest und wärmeisolierend ausgeführt. Über eine Zuleitung 134 und einen Druckminderer 144 ist das Gehäuse 143 mit einem Tank 145 verbunden. In dem Tank 145 ist Stickstoff enthalten, der als Druckmittel vorgesehen ist.

Bei intaktem Wechselspannungsnetz 6 befindet sich das Brennstoffzellensystem 111 in einem Bereitschaftszustand, in dem die Magnetventile 128 und 142 geschlossen sind. Des Weiteren sind die Magnetventile 124 und 129 geschlossen. Das Magnetventil 132 ist geöffnet. Aufgrund des geschlossenen Magnetventils 128 und des geöffneten Magnetventils 132 wird der Kathodenraum 114 mit Sauerstoff aus dem Tank 133 gefüllt. Der Sauerstoff steht mit einem Druck an der Membran 115 an. Der Druck kann mittels des Druckminderers 131 auf einen erwünschten Wert, beispielsweise auf 2 bar einstellbar sein. Der Sauerstoff kann jedoch aufgrund der geschlossenen Magnetventile 128 und 129 nicht durch den Kathodenraum 114 hindurchströmen. Aufgrund des geschlossenen Magnetventils 142 wird der Anodenraum 113 mit Wasserstoff aus dem Tank 126 gefüllt. Der Wasserstoff steht unter Druck an der Membran 115 an. Der Druck kann mittels des Druckminderers 147 auf einen gewünschten Wert, beispielsweise denselben Druck wie der des Kathodenraumes, einstellbar sein. Der Wasserstoff kann aufgrund der geschlossenen Magnetventile 142 und 124 nicht durch den Anodenraum hindurchströmen. Der im Innenraum 149 des Gehäuses 143 herrschende Stickstoffdruck kann ebenfalls über den Druckminderer 144 einstellbar sein. Über einen Ablass 146 und einen (nicht gezeigten) Brenner kann der Stickstoff ins Freie abgelassen werden. Eine unter Druck stehende Brennstoffzelle (2 bis 4 bar) ohne Stickstoffgegendruck im Innenraum 149 hätte Leckageverluste von etwa 1 bis 2 mbar pro Minute. Demnach würde sich nach einiger Zeit ein Knallgasgemisch H₂ + O₂ innerhalb des Gehäuses bilden. Dies wird durch die Bedruckung des Gehäuses mit N₂ vermieden. Da trotz N₂-Überdruck eine geringe H₂-Diffusion nicht ganz zu vermeiden ist, erfolgt eine langsame N₂-Spülung des Gehäuses 143 über den Auslass 146 und den Brenner.

Eine Möglichkeit für eine Regelung der Gasdrücke und Ströme ist in Fig. 4 gezeigt: Die drei Druckverminderer 131, 144 und 147 werden auf eine konstante Zwischendruckstufe eingestellt, die z. B. den Druck von 200 bar in den Flaschen auf 6 bar verringert. Die Feineinstellung erfolgt jeweils über drei nachgeschaltete PIC-Ventile (PIC = pressure indicated control) 150, 151, 152. Bei Stromunterbrechung im Netz und H₂ + O₂ Verbrauch stehen diese drei Ventile bis zu einem vorgegebenen Wert des Druckes offen. Im Bereitschaftszustand sind sie geschlossen, und die Gase stehen mit dem vorgegebenen Druck an der Membran 115 an. In den H₂- und O₂-Zuleitungen sind den Ventilen 150 und 151 jeweils zwei FIC-Ventile (FIC = flow indicated control) 153 und 154 für die Massenstromregelung vorgeschaltet.

Die Membran 115 ist protonenleitend. Das im Anodenraum 113 vorhandene H₂ ist fähig, Wasserstoffprotonen und Elektronen abzugeben. Die Wasserstoffprotonen gelangen durch die Membran 115 hindurch und reagieren mit dem in dem Kathodenraum 114 vorhandenen Sauerstoff zu Wasser. Durch die bei dieser chemischen Reaktion gebildeten Elektronen entsteht die bereits erwähnte elektrische Spannung auf der elektrischen Leitung 112.

Die Umwälzpumpe 122, die Heizung 120 und die Kühlereinheit 118 sind nach Bedarf im Bereitschaftszustand automatisch ausgeschaltet oder eingeschaltet. Sinkt die Temperatur der Zelle mit der Zeit ab und fällt unter eine Temperatur von beispielsweise etwa 70 ° C, so wird die Heizung 120 eingeschaltet. Das Wasser wird im Temperierkreislauf umgepumpt und erwärmt. Die in dem Bereitschaftszustand eingeschalteten Bauteile des Brennstoffzellensystems 111 werden dabei aus dem Wechselspannungsnetz 6 mit elektrischer Energie versorgt.

Von dem Bereitschaftszustand ausgehend, wird nun die Funktionsweise des erfindungsgemäßen Brennstoffzellensystems bei Stromausfall, anhand der zwei beispielhaften Ausführungen 11 bzw. 111 beschrieben.

Würde das Brennstoffzellensystem 11 oder das System 111 in dem beschriebenen Bereitschaftszustand mit einer elektrischen Last, beispielsweise von den Verbrauchern 2 beaufschlagt werden, so hätte dies zur Folge, daß die genannte Spannung aufgrund des abgeschlossenen Kathodenraums 14 oder 114 und der damit begrenzten Menge an vorhandenem Sauerstoff relativ schnell absinken würde. Der von dem Brennstoffzellensystem lieferbare Strom wäre ebenfalls relativ gering. Der Spannungs-, wie auch der Stromverlauf wäre dabei von dem Volumen des Anodenraum 13 bzw. 113 und des Kathodenraums 14 bzw. 114 abhängig, also von der Anzahl der vorhandenen Stacks.

Wird nun ein Ausfall des Wechselspannungsnetzes 6 von dem Steuergerät 9 erkannt, so wird erfindungsgemäß das Magnetventil 28 bzw. 128 geöffnet. Damit geht das Brennstoffzellensystem 11 bzw. 111 in seinen Betriebszustand über. Dies hat zur Folge, daß der Kathodenraum 14 bzw. 114 nicht mehr abgeschlossen ist, und daß der Sauerstoff durch den Kathodenraum 14, 114 hindurchströmen kann. Es kann damit eine permanente chemische Reaktion in dem Brennstoffzellensystem 11, 111 stattfinden. Es reagiert also fortwährend im System 11 das Methanol/Wasser-Gemisch in dem Anodenraum 13 unter Abgabe von Wasserstoffprotonen und Elektronen zu Kohlendioxid, und es reagieren die durch die Membran 15 bzw. 115 hindurchgetretenen Wasserstoffprotonen mit dem Sauerstoff in dem Kathodenraum 14 bzw. 114 zu Wasser. Durch die permanent erzeugten Elektronen wird fortwährend eine Spannung bzw. ein Strom auf der Leitung 12 bzw. 112 zur Verfügung gestellt.

Diese elektrische Spannung auf der Leitung 12 bzw. 112 wird über die Kapazität 10 gepuffert und über die Wechselrichter 7 an die elektrischen Verbraucher 2 weitergegeben, die somit nunmehr von dem Brennstoffzellensystem 11 bzw. 111 mit Strom versorgt werden. In diesem Betriebszustand des Brennstoffzellensystems ersetzt somit das Brennstoffzellensystem die Energieversorgung der Verbraucher 2 aus dem Wechselspannungsnetz 6.

In dem Brennstoffzellensystem 11 werden bei dem Übergang von dem Bereitschaftszustand in den Betriebszustand zusätzlich zu dem bereits erwähnten Magnetventil 28 auch das Bypass-Magnetventil 35 und das Magnetventil 42 geöffnet. Des weiteren wird der Motor 36 und damit die Kompressor-Expander-Einheit 37, die Pumpe 41 und die Kühlmittelpumpe 22 eingeschaltet sowie die Heizung 20 ausgeschaltet.

In dem Betriebszustand wird durch die permanent ablaufende chemische Reaktion Wärme erzeugt. So verläßt das Methanol/Wasser-Gemisch den Anodenraum 13 mit einer Temperatur von etwa 110 Grad und wird danach von dem Kühler 18 auf eine Temperatur von etwa 40 grad abgekühlt. In dem nachfolgenden Abscheider 19 wird gasförmiges Kohlendioxid ausgeschieden und über das geöffnete Magnetventil 42 dem katalytischen Brenner 29 zugeführt. Dort wird das abgeschiedene Kohlendioxid zusammen mit gegebenenfalls ebenfalls abgeschiedenem restlichen Methanol verbrannt. Die entstehenden Abgase werden von der eingeschalteten Kompressor-Expander-Einheit 37 entspannt und mit Hilfe des Kühlers 39 wird das Wasser wieder zurückgewonnen. Dieses Wasser kann über die eingeschaltete Pumpe 41 dem Abscheider 19 des Anodenkreislaufs 16 zugeführt werden. Das in dem Abscheider 19 vorhandene abgekühlte Methanol/Wasser-Gemisch gelangt nunmehr über das Thermostatventil 21 wieder zum Anodenraum 13. Dabei wird das Methanol/Wasser-Gemisch über den Abscheider 24 und in Abhängigkeit von dem Thermostatventil 21 mit gerade soviel heißem Methanol/Wasser-Gemisch vermischt, daß insgesamt ein Gemisch von etwa 90 Grad bis etwa 110 Grad entsteht, das dann in der Anodenzuleitung 23 vorhanden ist. Überschüssiges heißes Methanol/Wasser-Gemisch gelangt aus dem Abscheider 24 zu dem Kühler 18. Des weiteren ist in dem Betriebszustand des Brennstoffzellensystems 11 die Dosierpumpe 25 eingeschaltet, so daß neues Methanol dem Anodenkreislauf 16 hinzugefügt wird.

In einem ersten kurzen Zeitraum von etwa 2 sec bis etwa 20 sec, z. B. 4 - 5 sec, nach dem Übergang des Brennstoffzellensystems 11 von dem Bereitschaftszustand in den Betriebszustand wird dem Kathodenraum 14 der Sauerstoff aus dem Tank 33 zugeführt. In diesem Zeitraum läuft die mit dem Übergang eingeschaltete Kompressor-Expander-Einheit 37 hoch und erreicht ihre Betriebsdrehzahl. Während dieses Hochlaufens wird die von dem Kompressorteil der Kompressor-Expander-Einheit 37 über den Filter 38 angesaugte Luft über das geöffnete Bypass-Magnetventil 35 weitergegeben. Nach dem Hochlaufen, also nach Ablauf des genannten Zeitraums, wird das Magnetventil 34 geöffnet und das Bypass-Magnetventil 35 wieder geschlossen. Damit wird die von dem Kompressorteil der Kompressor-Expander-Einheit 37 angesaugte Luft dem Kathodenraum 14 zugeführt. Der Kathodenraum 14 erhält somit über die angesaugte Luft den für die chemische Reaktion erforderlichen Sauerstoff. Das Magnetventil 32 wird danach in einen geschlossenen Zustand überführt, so daß kein weiterer Sauerstoff von dem Tank 33 mehr zu dem Kathodenraum 14 strömen kann.

In dem Brennstoffzellensystem 111 werden bei dem Übergang von dem Bereitschaftszustand in den Betriebszustand zusätzlich zu dem Magnetventil 128 die Magnetventile 129, 142 und 124 geöffnet. Die Magnetventile 141 und 148 sind im Betriebszustand vorerst geschlossen.

Durch die Gasrückführung über den Anodenkreislauf 116 und den Kathodenkreislauf 117 werden trocken gesättigte Abgase mit trockenem Drucksauerstoff bzw. Wasserstoff vermischt. Eine zusätzliche Befeuchtung ist also nicht unbedingt notwendig. Der Druckverlust infolge der Rückführung der Gase wird mithilfe der Strahlpumpen 125 und 139 ausgeglichen.

Im Betriebszustand wird durch die elektrochemische Reaktion genügend Wärme erzeugt, so dass die Heizung 120 nicht gebraucht wird. Bei Übertemperatur kann, durch Anlaufen der Umwälzpumpe, mittels des Kühlers 118 die Kühlwassertemperatur auf etwa 80 ° C gefahren werden. Das durch die elektrochemische Reaktion gebildete H₂O wird in den Abscheidern 119 und 140 abgeschieden. Es kann über ein Ventil 155 den Temperierkreislauf speisen oder (Leitung nicht gezeigt) einem Luftbefeuchter 155 in der Zuleitung 130 zugeführt werden.

Für Stromunterbrechungen von mehr als 18 s - 20 s wird vom Sauerstoffbetrieb auf den Luftbetrieb gewechselt. Der Kompressor 137 läuft hoch und saugt über den Filter 138 Luft an. Nach dem Luftdruckanstieg öffnen sich das Magnetventil 136 und das Ventil 141, während das Magnetventil 132 sowie das Magnetventil 129 des Kathodenkreislaufes geschlossen werden. Das Ventil 148 kann von Zeit zu Zeit zweck Entgasung (Purge) geöffnet werden. Die Luft kann zusätzlich über den Befeuchter 155 befeuchtet werden. Die Massenstromregelung des H₂-Stroms und anfänglichen O₂- und späteren Luftstroms erfolgt mit den im Betriebszustand offenen PIC- und FIC-Ventilen 150, 151, 152, 153, 154.

Die in dem Betriebszustand eingeschalteten elektrischen Bauteile der Brennstoffzellensysteme 11 und 111 werden dabei aus dem Brennstoffzellensystem selbst mit elektrischer Energie versorgt.

Das Brennstoffzellensystem stellt somit in seinem Betriebszustand nach einem Ausfall des Wechselspannungsnetzes 6 mittels des aus dem Tank 33 oder 133 gelieferten Sauerstoffs eine unterbrechungsfreie Stromversorgung der Verbraucher 2 sicher. Nach einem Umschalten auf den Kompressor 37 bzw. 137 und einem Abschalten des Tanks 33 bzw. 133 stellt das Brennstoffzellensystem 11 bzw. 111 eine Netzersatzanlage dar, die im wesentlichen nur noch Methanol bzw. H₂ verbraucht. Der Sauerstoff im Tank 33, 133 und der Stickstoff im Tank 45, 145 werden nur geringfügig oder gar nicht mehr verbraucht.

Im Bereitschaftszustand ist der Verbrauch von Sauerstoff, Stickstoff und H₂ oder Methanol durch das Brennstoffzellensystem nahezu Null. Es wird nur in gewissen zeitlichen Abständen elektrische Energie für die Heizung 20, 120 und die Kühlmittelpumpe 22 bzw. 122 verbraucht.

## Patentansprüche

1. Brennstoffzellensystem (11, 111) mit einem Anodenraum (13, 113) und einem Kathodenraum (14, 114), die durch eine protonenleitende Membran (15, 115) voneinander getrennt sind, wobei im Betriebszustand dem Anodenraum (13, 113) ein Brennstoff, und dem Kathodenraum (14, 114) ein Oxidator zuführbar ist, wobei in einem Bereitschaftszustand der Brennstoff in dem Anodenraum (13,113) vorhanden ist und wobei in dem Bereitschaftszustand der Kathodenraum (14, 114) nicht durchströmbar ist und der Kathodenraum (14, 114) mit dem Oxidator gefüllt ist.

2. Brennstoffzellensystem nach Anspruch 1, **dadurch gekennzeichnet, daß** der Oxidator ganz oder teilweise aus gasförmigem Sauerstoff (O₂, L) besteht und unter Druck an der Membran (15, 115) ansteht.

3. Brennstoffzellensystem nach Anspruch 1 oder 2, **dadurch gekennzeichnet, daß** der Kathodenraum (14, 114) mit einer Kathodenableitung (27, 127) verbunden ist, die mit einem Kathodenableitung-Sperrglied, insbesondere einem Magnetventil (28, 128), versehen ist, das in dem Bereitschaftszustand geschlossen ist.

4. Brennstoffzellensystem nach einem der Ansprüche 1 bis 3, **dadurch gekennzeichnet, daß** der Kathodenraum (14, 114) mit einer Kathodenzuleitung verbunden ist, die über ein erstes Sperrglied, insbesondere ein erstes Magnetventil (32, 132) und/oder einen Druckminderer (31, 131), mit mindestens einem mit dem Oxidator gefüllten Tank (33, 133) verbunden ist, wobei im Bereitschaftszustand das genannte erste Sperrglied (32, 132) offen ist.

5. Brennstoffzellensystem nach Anspruche 4, **dadurch gekennzeichnet, daß** der Kathodenraum über die Kathodenzuleitung und ein zweites Sperrglied, insbesondere ein Magnetventil (34, 136), mit einem ein Gas, insbesondere Luft (L), ansaugenden Kompressor (37, 137) oder dergleichen verbunden ist.

6. Brennstoffzellensystem nach einem der vorhergehenden Ansprüche, **dadurch gekennzeichnet, daß** in dem Bereitschaftszustand der Brennstoff in dem Anodenraum (13, 113) vorhanden ist.

7. Brennstoffzellensystem nach einem der vorhergehenden Ansprüche, **dadurch gekennzeichnet, daß** der Brennstoff unter Druck an der Membran (15, 115) ansteht.

8. Brennstoffzellensystem nach Anspruch 6 oder 7, **dadurch gekennzeichnet, daß** der Anodenraum mit einem Anodenkreislauf (16, 116) verbunden ist.

9. Brennstoffzellensystem nach Anspruch 8, **dadurch gekennzeichnet, daß** der Brennstoff aus einem Wasser/Methanol-Gemisch besteht und dass der Anodenkreislauf (16) mit Temperiermitteln, insbesondere mit einer Pumpe (22) und einer Heizung (20) versehen ist.

10. Brennstoffzellensystem nach Anspruch 9, **dadurch gekennzeichnet, daß** der Anodenkreislauf (16) unter dem Druck eines inerten Gases steht, insbesondere unter einem Stickstoffdruck.

11. Brennstoffzellensystem nach einem der Ansprüche 6 bis 8, **dadurch gekennzeichnet, dass** der Brennstoff Wasserstoff ist und dass der Anodenraum mit einer Anodenableitung 117 verbunden ist, die mit einem Anodenableitungsperrglied, insbesondere einem Magnetventil (142), versehen ist, das im Bereitschaftszustand geschlossen ist.

12. Brennstoffzellensystem nach Anspruch 11, **dadurch gekennzeichnet, dass** der Anodenkreislauf (116) und der Kathodenkreislauf über Strahlpumpen (125, 139) und Sperrglieder, insbesondere Magnetventile (124, 129), jeweils mit der Anodenzuleitung 123 und der Kathodenzuleitung 130 verbunden sind.

13. Brennstoffzellensystem nach einem der vorhergehenden Ansprüche, **dadurch gekennzeichnet, daß** die Brennstoffzelle in einem gasdichten und gegebenenfalls wärmedichten Gehäuse untergebracht ist, wobei das Gehäuse mit einem Druckbehälter (45, 145) eines Gases, insbesondere Stickstoff, in Verbindung steht.

14. Brennstoffzellensystem nach einem der vorhergehenden Ansprüche, **dadurch gekennzeichnet, dass** das Brennstoffzellensystem (11, 111) mit einem Temperierkreislauf (16, 118, 120, 121, 122) ausgestattet ist.

15. Anordnung zur unterbrechungsfreien Stromversorgung mindestens eines elektrischen Verbrauchers, dessen Energie im Normalfall einem Wechselspannungsnetz und bei Ausfall des Wechselspannungsnetzes einem Brennstoffzellensystem entnehmbar ist, **dadurch gekennzeichnet, daß** das Brennstoffzellensystem nach einem der vorhergehenden Ansprüche vorgesehen ist, wobei im Normalfall sich das Brennstoffzellensystem im Bereitschaftszustand befindet.

16. Verfahren zum Betreiben einer Anordnung nach Anspruch 15, **dadurch gekennzeichnet, daß** der Kathodenraum in einem Bereitschaftszustand nicht durchströmbar ausgestaltet wird und mit dem Oxidator gefüllt wird und daß der Anodenraum mit dem Brennstoff gefüllt wird.

17. Verfahren nach Anspruch 16, **dadurch gekennzeichnet, daß** der Anodenraum in dem Bereitschaftszustand als nicht durchströmbar ausgestaltet ist.

18. Verfahren nach Anspruch 16 oder 17, **dadurch gekennzeichnet, daß** im Bereitschaftszustand der Brennstoff und der Oxidator unter Druck an der Membran anstehen.

19. Verfahren nach einem der Ansprüche 16 bis 18, **dadurch gekennzeichnet, daß** für einen Übergang von dem Bereitschaftszustand in den Betriebszustand ein Kathodenableitungssperrglied geöffnet und der Oxidator dem Kathodenraum zugeführt wird.

20. Verfahren nach Anspruch 19, **dadurch gekennzeichnet, daß** der Oxidator zuerst aus einem Tank dem Kathodenraum zugeführt wird, und daß dann ein Gas, insbesondere Luft, in den Kathodenraum angesaugt wird.

21. Verfahren nach einem der Ansprüche 19 oder 20, **dadurch gekennzeichnet, dass** für einen Übergang vom Bereitschaftszustand in den Betriebszustand ein Anodenableitungssperrglied geöffnet und der Brennstoff dem Anodenraum zugeführt wird.

22. Verfahren nach einem der Ansprüche 16 bis 21, **dadurch gekennzeichnet, dass** der Innenraum des Gehäuses (43, 143) des Brennstoffzellensystems unter einem Überdruck eines Gases, insbesondere Stickstoff, gehalten wird.

23. Verfahren nach einem der Ansprüche 16 bis 22, **dadurch gekennzeichnet, dass** die Brennstoffzelle in dem Bereitschaftszustand bei Betriebstemperatur gehalten wird.

## Claims

1. Fuel cell system (11, 111) having an anode compartment (13, 113) and a cathode compartment (14, 114) separated from each other by a proton-conducting membrane (15, 115), whereby in the operational condition a fuel may be fed to the anode compartment (13, 113) and an oxidiser may be fed to the cathode compartment (14, 114), whereby in a stand-by condition, the fuel is present in the anode compartment (13, 113) and whereby in the stand-by condition, the cathode compartment (14, 114) does not permit any flow through itself and the cathode compartment (14, 114) is filled with the oxidiser.

2. Fuel cell system according to Claim 1, **characterised in that** the oxidiser entirely or partially comprises gaseous oxygen (O₂, L) and lies against the membrane (15, 115) under pressure.

3. Fuel cell system according to Claim 1 or 2, **characterised in that** the cathode compartment (14, 114) is connected to a cathode outlet line (27, 127) which is provided with a cathode outlet line blocking member, in particular a magnetic valve (28, 128), which in the stand-by condition is closed.

4. Fuel cell system according to one of the claims 1 to 3, **characterised in that** the cathode compartment (14, 114) is connected to a cathode supply line, which is connected via a first blocking member, in particular a first magnetic valve (32, 132) and/or a pressure reducer (31, 131) to at least one tank (33, 133) filled with the oxidiser, whereby in the stand-by condition, said first blocking member (32, 132) is open.

5. Fuel cell system according to Claim 4, **characterised in that** the cathode compartment is connected via the cathode supply line and a second blocking member, particularly a magnetic valve (34, 136), to a compressor (37, 137) or similar drawing in a gas, in particular air (L).

6. Fuel cell system according to one of the previous claims, **characterised in that** in the stand-by condition, the fuel is present in the anode compartment (13, 113).

7. Fuel cell system according to one of the previous claims, **characterised in that** the fuel lies against the membrane (15, 115) under pressure.

8. Fuel cell system according to Claim 6 or 7, **characterised in that** the anode compartment is connected to an anode circuit (16, 116).

9. Fuel cell system according to Claim 8, **characterised in that** the fuel comprises a water/methanol mixture and that the anode circuit (16) is provided with temperature adjustment means, in particular, with a pump (22) and a heater (20).

10. Fuel cell system according to Claim 9, **characterised in that** the anode circuit (16) is subject to the pressure of an inert gas, in particular, nitrogen pressure.

11. Fuel cell system according to one of the claims 6 to 8, **characterised in that** the fuel is hydrogen and that the anode compartment is connected to an anode outlet line 117, which is provided with an anode outlet line blocking member, in particular a magnetic valve (142), which in the stand-by condition is closed.

12. Fuel cell system according to Claim 11, **characterised in that** the anode circuit (116) and the cathode circuit are connected via jet pumps (125, 139) and blocking members, in particular, magnetic valves (124, 129), to the anode supply line 123 and the cathode supply line 130, respectively.

13. Fuel cell system according to one of the previous claims, **characterised in that** the fuel cell is accommodated in a gas-tight and possibly heat-insulating housing, whereby the housing is connected to a pressure container (45, 145) of a gas, in particular, nitrogen.

14. Fuel cell system according to one of the previous claims, **characterised in that** the fuel cell system (11, 111) is equipped with a temperature adjustment circuit (16, 118, 120, 121, 122).

15. Arrangement for uninterruptable power supply of at least one electricity consumer, whose energy may normally be drawn from an alternating current mains supply and on failure of the alternating current mains may be drawn from a fuel cell system, **characterised in that** the fuel cell system is provided according to one of the previous claims, whereby normally, the fuel cell system is in the stand-by condition.

16. Method for operating an arrangement according to Claim 15, **characterised in that** the cathode compartment is designed such that in a stand-by condition no flow through it is possible and that it is filled with the oxidiser and that the anode compartment is filled with the fuel.

17. Method according to Claim 16, **characterised in that** the anode compartment is designed such that in the stand-by condition no flow through it is possible.

18. Method according to Claim 16 or 17, **characterised in that** in the stand-by condition the fuel and the oxidiser lie against the membrane under pressure.

19. Method according to one of the claims 16 to 18, **characterised in that** for a transition from the stand-by condition into the operational condition, a cathode outlet line blocking member is opened and the oxidiser is fed into the cathode compartment.

20. Method according to Claim 19, **characterised in that** the oxidiser is first fed from a tank to the cathode compartment and that then a gas, in particular air, is drawn into the cathode compartment.

21. Method according to one of the claims 19 or 20, **characterised in that** for a transition from the stand-by condition into the operational condition, an anode outlet line blocking member is opened and the fuel is fed into the anode compartment.

22. Method according to one of the claims 16 to 21, **characterised in that** the interior space of the housing (43, 143) of the fuel cell system is held under pressure by a gas, in particular nitrogen.

23. Method according to one of the claims 16 to 22, **characterised in that**, in the stand-by condition, the fuel cell is kept at operating temperature.

## Revendications

1. Système de pile à combustible (11, 111) comportant une chambre anodique (13, 113) et une chambre cathodique (14, 114) qui sont séparées l'une de l'autre par une membrane (15, 115) conductrice pour les protons, système dans lequel, à l'état de fonctionnement, un combustible peut être envoyé dans la chambre anodique (13, 113) et un oxydant peut être envoyé dans la chambre cathodique (14, 114), et dans lequel, dans un état de veille, le combustible est disponible dans la chambre anodique (13, 113), et dans lequel, à l'état de veille, la chambre cathodique (14, 114) ne peut pas être traversée par un flux et la chambre cathodique (14, 114) est remplie par l'oxydant.

2. Système de pile à combustible selon la revendication 1, **caractérisé en ce que** l'oxydant est constitué totalement ou partiellement d'oxygène sous forme gazeuse (O₂, L) et est appliqué sous pression sur la membrane (15, 115).

3. Système de pile à combustible selon la revendication 1 ou 2, **caractérisé en ce que** la chambre cathodique (14, 114) est reliée à une conduite de sortie de la cathode (27, 127) qui est munie d'un élément de fermeture de la conduite de sortie de la cathode, en particulier une vanne magnétique (28, 128), qui est fermée à l'état de veille.

4. Système de pile à combustible selon l'une quelconque des revendications 1 à 3, **caractérisé en ce que** la chambre cathodique (14, 114) est reliée à une conduite d'entrée de la cathode qui est reliée, par l'intermédiaire d'un premier élément de fermeture, en particulier une première vanne magnétique (32, 132) et/ou un réducteur de pression (31, 131), avec un réservoir (33, 133) rempli avec l'oxydant, ledit premier élément de fermeture (32, 132) étant ouvert à l'état de veille.

5. Système de pile à combustible selon la revendication 4, **caractérisé en ce que** la chambre cathodique (14, 114) est reliée, par l'intermédiaire de la conduite d'entrée de la cathode et d'un deuxième élément de fermeture, en particulier d'une vanne magnétique (34, 136), à un compresseur (37, 137) ou analogue qui aspire un gaz, en particulier de l'air (L).

6. Système de pile à combustible selon l'une des revendications précédentes, **caractérisé en ce que**, à l'état de veille, le combustible est disponible dans la chambre anodique (13, 113).

7. Système de pile à combustible selon l'une des revendications précédentes, **caractérisé en ce que** le combustible est appliqué sous pression sur la membrane (15, 115).

8. Système de pile à combustible selon la revendication 6 ou 7, **caractérisé en ce que** la chambre anodique est reliée à un circuit anodique (16, 116).

9. Système de pile à combustible selon la revendication 8, **caractérisé en ce que** le combustible est constitué d'un mélange d'eau et de méthanol et **en ce que** le circuit fermé anodique (16) est équipé de moyens d'équilibrage, en particulier à l'aide d'une pompe (22) et d'un dispositif de chauffage (20).

10. Système de pile à combustible selon la revendication 9, **caractérisé en ce que** le circuit anodique (16) est sous la pression d'un gaz inerte, en particulier sous une pression d'azote.

11. Système de pile à combustible selon l'une des revendications 6 à 8, **caractérisé en ce que** le combustible est de l'hydrogène et **en ce que** la chambre anodique est reliée à une conduite de sortie de l'anode qui est équipée d'un élément de fermeture de la conduite de sortie de l'anode, en particulier d'une vanne magnétique (142) qui est fermée à l'état de veille.

12. Système de pile à combustible selon la revendication 11, **caractérisé en ce que** le circuit fermé anodique (116) et le circuit fermé cathodique sont reliés, par l'intermédiaire de pompes à jet (125, 139) et d'éléments de fermeture, en particulier de vannes magnétiques (124, 129), respectivement à la conduite d'entrée de l'anode (123) et à la conduite d'entrée de la cathode (130).

13. Système de pile à combustible selon l'une des revendications précédentes, **caractérisé en ce que** la pile à combustible est placée dans un boîtier étanche aux gaz et également étanche à la chaleur, ledit boîtier étant en liaison avec un réservoir sous pression (45, 145) contenant un gaz, en particulier de l'azote.

14. Système de pile à combustible selon l'une des revendications précédentes, **caractérisé en ce que** le système de pile à combustible (11, 111) est équipé d'un circuit d'équilibrage de la température (16, 118, 120, 121, 122).

15. Dispositif pour l'alimentation en courant sans interruption d'au moins un consommateur d'électricité dont l'énergie est prélevée, dans les conditions normales, sur un réseau à tension alternative et, lors de la disparition du réseau à tension alternative, sur un système de pile à combustible, **caractérisé en ce que** le système de pile à combustible est prévu conformément selon l'une des revendications précédentes, le système de pile à combustible se trouvant à l'état de veille dans les conditions normales.

16. Procédé pour mettre en oeuvre un dispositif selon la revendication 15, **caractérisé en ce que** la chambre cathodique est, en un état de veille, conformée de manière à ne pas pouvoir être traversée par un flux et est remplie avec l'oxydant et **en ce que** la chambre anodique est remplie avec le combustible.

17. Procédé selon la revendication 16, **caractérisé en ce que**, en état de veille, la chambre anodique est conformée de manière à ne pas pouvoir être traversée par un flux.

18. Procédé selon la revendication 16 ou 17, **caractérisé en ce que**, en état de veille, le combustible et l'oxydant sont appliqués sous pression sur la membrane.

19. Procédé selon l'une des revendications 16 à 18, **caractérisé en ce que**, pour un passage de l'état de veille à l'état de fonctionnement, un élément de fermeture de la conduite de sortie de la cathode est ouvert et de l'oxydant est envoyé dans la chambre cathodique.

20. Procédé selon la revendication 19, **caractérisé en ce que**, tout d'abord, l'oxydant est envoyé, à partir d'un réservoir, dans la chambre cathodique et que, ensuite, un gaz est aspiré, en particulier de l'air, dans la chambre cathodique.

21. Procédé selon l'une des revendications 19 ou 20, **caractérisé en ce que**, pour un passage de l'état de veille à l'état de fonctionnement, un élément de fermeture de la conduite de sortie de l'anode est ouvert et le combustible est envoyé dans la chambre anodique.

22. Procédé selon l'une des revendications 16 à 21, **caractérisé en ce que** la chambre interne du boîtier (43, 143) du système de pile à combustible est maintenu sous la surpression d'un gaz, en particulier l'azote.

23. Procédé selon l'une des revendications 16 à 22, **caractérisé en ce que** la pile à combustible est maintenue à l'état de veille à la température de fonctionnement.
